Europäisches Patentamt

European Patent Office

Office européen des brevets

(19)

(11) Veröffentlichungsnummer: **0 019 783**
**B1**

(12) **EUROPÄISCHE PATENTSCHRIFT**

(45) Veröffentlichungstag der Patentschrift:
05.12.84

(51) Int. Cl.³: **A 21 B 3/13**

(21) Anmeldenummer: **80102601.4**

(22) Anmeldetag: **10.05.80**

(54) **Faltbare Backform.**

(30) Priorität: **10.05.79 DE 2918814**

(43) Veröffentlichungstag der Anmeldung:
**10.12.80 Patentblatt 80/25**

(45) Bekanntmachung des Hinweises auf die Patenterteilung:
**05.12.84 Patentblatt 84/49**

(84) Benannte Vertragsstaaten:
**AT BE CH FR IT LI NL SE**

(56) Entgegenhaltungen:
**CH - A - 391 616**
**DE - A - 2 456 209**
**DE - U - 7 604 504**
**FR - A - 2 442 198**
**US - A - 3 580 484**

(73) Patentinhaber: **Meurer Nonfood Product GmbH,
Libellenweg 10, D-7760 Radolfzell (DE)**

(72) Erfinder: **Vossen, Franz, Höherstrasse 30,
D-7768 Stockach (DE)**

(74) Vertreter: **Hiebsch, Gerhard F., Dipl.-Ing.,
Erzbergerstrasse 5A Postfach 464, D-7700 Singen 1 (DE)**

# Beschreibung

Die Erfindung betrifft eine faltbare Backform mit einem Boden sowie davon ausgehenden Seiten- und Stirnwandungen, welche aus einer Werkstoffbahn mit einer zu dem von der Backforminnenfläche umgebenen Forminnenraum weisenden Kontaktschicht für das Backgut, insbesondere aus einem Karton mit einer Beschichtung aus Aluminiumfolie, zugeschnitten und dieser Zuschnitt seinerseits an vorgegebenen Linien gefaltet ist, wobei die Stirnwandungen miteinander verbundene Klappstreifen der Seitenwandungen sowie ein diesen zugeordnetes, als Knickzunge ausgebildetes Klappteil des gegen ihn durch eine Klapplinie abgegrenzten Bodens aufweisen.

Backformen dieser Art sind handelsüblich und werden etwa – zu einem flachen Versandstück gefaltet – Verkaufspackungen für fertige Backmischungen beigefügt, um der Hausfrau das Backen zu erleichtern. Die Backform wird hierzu auseinandergeklappt, mit dem gegebenenfalls noch zu mischenden Backgut gefüllt und in den Ofen geschoben. Um dann den fertigen Kuchen aus der Backform entfernen zu können, müssen die Wandungen wenigstens teilweise gelockert werden. Dies hat man beispielsweise nach DE-U-7 604 504 durch Verwendung eines Klebers zwischen ihren Klappstreifen und einer um deren Oberkante gebogenen Lasche versucht, welcher sich durch die Hitze des Backvorganges lösen soll. Erfahrungsgemäss löst sich der Kleber zu früh – die Backform fällt im Ofen auseinander – oder gar nicht, was das Öffnen der Backform stark erschwert. Ausserdem ist die Herstellung solcher Backformen verhältnismässig kompliziert.

Die Klappstreifen nach der Entgegenhaltung bilden die Innenfläche der Backform; sie sind aussen lose angeklappt und werden durch eine sogenannte Überwurflasche an die Aussenfläche des Klappteils angedrückt. Die Innenseite der Überwurflasche ist mit einer sich auflösenden Dispersionskleberschicht an die Aussenseite der Klappstreifen angefügt. Eine über die Faltlinie aufragende Lasche besteht aus Vorsprüngen, die dank ihres Eingriffes in Einstanzung als Befestigungsorgane dienen.

Als weiterer Mangel ist anzusehen, dass an den Seitenwänden dieser Backform vorhandene und entlang einer Perforation knickbare Randstreifen, welche in gebrauchsfertiger Lage von den Seitenwänden abgebogen sind und deren Stabilität erhöhen sollen, durch die Hitzeeinwirkung aus der abgebogenen Lage in die Ebene der Seitenwand zurückwanden und so deren Ausbauchung erlauben.

Nach der US-A-3 580 484 sind ausserdem Verpackungsbehälter mit von anderen Verpackungsteilen zu trennendem Wandungsteil mit etwa keilförmiger Trennzunge bekannt, welche beidseits mit den verbleibenden Verpackungsteilen durch Bereiche einer Gegenritzung verbunden ist.

Angesichts dieser Gegebenheiten hat sich der Erfinder das Ziel gesetzt, eine Backform der eingangs erwähnten Art zu schaffen, welche während des Backvorgangs ihre Form sicher beibehält und an dessen Ende leicht vom Backgut zu lösen ist. Darüber hinaus soll diese Form auf einfache und damit besonders kostengünstige Weise hergestellt werden können.

Zur Lösung dieser Aufgabe führt, dass das Klappteil ausserhalb des Backforminnenraumes an die Aussenseite der Klappstreifen, die Teile der Backforminnenfläche bilden, herangeklappt ist und dass die Knickzunge aus einer Mittelzunge mit Zuglasche und beidseits der Mittelzunge vorhandenen sowie von dieser an einer Reisslinie trennbaren Flügeln besteht, welch letztere mit den Klappstreifen fest verbunden sind.

Nach einem weiteren Merkmal der Erfindung sollen die Reisslinien an jeder Flügelkante eine Gegenritzung bilden und so jener Mittelzunge dargestellt von den Flügeln durch die Gegenritzungen trennbar sein, dass an beiden zu trennenden Teilen jeweils ein dem Abstand der Ritzungen entsprechender Streifen verbleibt.

Dank dieser Massgaben bleibt die Stirnwandung der Backform während des gesamten Backvorganges geschlossen; das Öffnen der Stirnwandung erfolgt ausschliesslich durch die gewollte Trennung von Mittelstück und Flügeln im Bereich der sogenannten Gegenritzungen. Die Flügel sind – bevorzugt durch einen Kleber grossflächig – mit den Klappstreifen der Seitenwandungen fest verbunden – und dies unabhängig von den herrschenden Temperaturen. Selbstverständlich sind auch andere Verbindungsmöglichkeiten hier anwendbar, was bei der zuvor beschriebenen und handelsüblichen Backform gar nicht denkbar wäre.

Da sich bei den Versuchen mit der erfindungsgemässen Backform gezeigt hat, dass das Öffnungssystem für eine ganze Behälterwandung mittels einer Zuglasche und beidseits davon verlaufenden und miteinander einen Neigungswinkel einschliessenden – also ein keilförmiges Feld begrenzenden – Bereichen einer sog. Gegenritzung ganz allgemein sehr vorteilhaft ist, wird hierfür ein gesonderter Schutz begehrt. Jeder Bereich einer Gegenritzung wird von zwei in Abstand etwa parallel verlaufenden Ritzlinien erzeugt, von denen jede mit geringer Eindringtiefe in eine andere Oberfläche der Klappzunge oder Wandung eingebracht ist.

Als besonders günstig hat es sich erwiesen, dass jeder Flügel eine vom Boden der Backform ausgehende und etwa parallel zu ihnen Ritzungen verlaufende Aussenkante aufweist, welche an einer Einschnürstelle in eine obere, zur Seite weisende Aussenkante übergeht, die etwa an der Oberkante der benachbarten Seitenwandung endet. Dies erlaubt eine möglichst grossflächige Verbindung der beiden die Stirnwandung erzeugenden und aufeinander liegenden Werkstoffbahnstücke. Diese sind jedoch dank der erfindungsgemässen Ausführung leicht so weit voneinander zu trennen, dass die Backformwandungen auseinandergeklappt zu werden vermögen.

Um bei Seitenwandungen mit umklappbaren Randstreifen deren Zurückwandern unter Einfluss der Backhitze hintanzuhalten, ist in besonders vorteilhafter Weise in den Seitenwandungen eine etwa parallel zum Boden verlaufende Ritzung nahe oder an der Oberkante der Seitenwandung vorgesehen, welche die Kontaktschicht, also vor allem eine Aluminiumfolie durchtrennt.

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in:

Fig. 1 eine Schrägsicht auf eine Backform;

Fig. 2 den Schnitt durch Fig. 1 nach deren Linie II–II;

Fig. 3 einen Detailschnitt durch die Backform etwa entsprechend der Linie III–III in Fig. 2;

Fig. 4 eine Schrägsicht auf einen Teil der Backform in verändertem Zustand;

Fig. 5 die Draufsicht auf eine Hälfte des Zuschnittes zur Herstellung einer Backform.

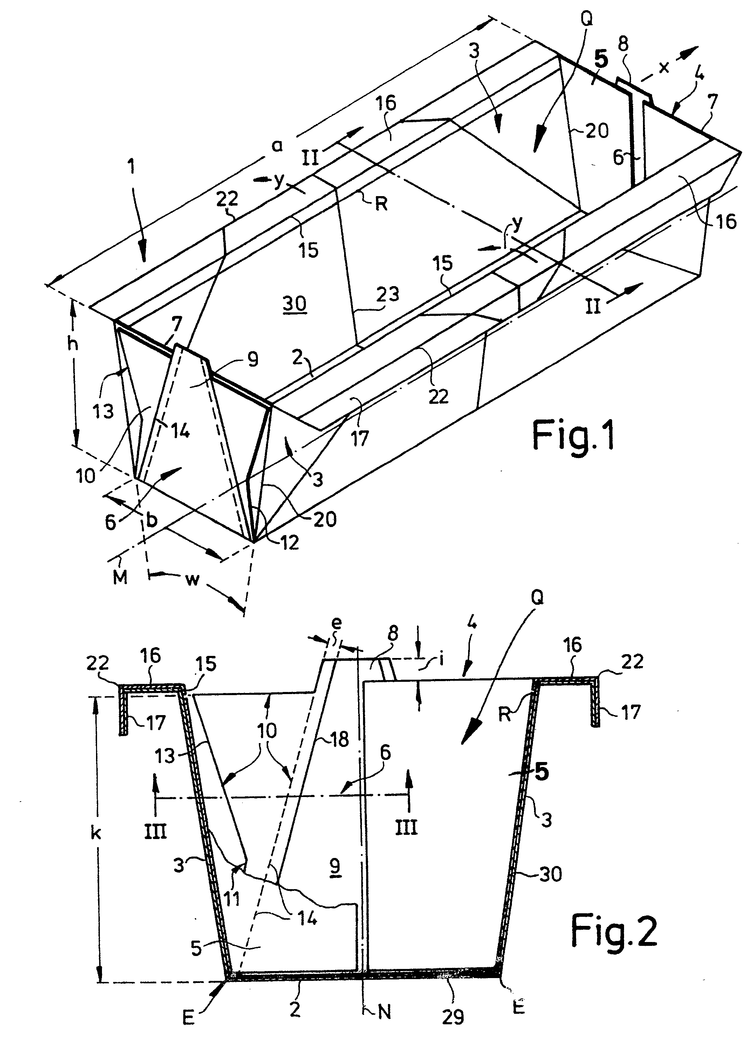

Eine Backform 1 gemäss dem in Fig. 1 dargestellten Ausführungsbeispiel besteht aus einem Boden 2 der Länge a von beispielsweise 250 mm sowie der Breite b von 70 mm, zwei zueinander in einem Winkel w geneigt verlaufenden Seitenwänden 3 der Höhe h von etwa 75 mm sowie zwei Stirnwänden 4. Durch die Mittellinien M, N der Backform 1 ist die Symmetrieebene für die Formgebung bestimmt.

Jede Stirnwand 4 wird von zwei Klappstreifen 5, von denen jeder mit einer Seitenwand 3 entlang einer Knicklinie 20 verbunden ist, und einer Klappzunge 6 gebildet, die entlang einer Knicklinie 21 am Boden 2 hängt. Diese Klappzunge 6 überragt mit einem Mass i die Oberkante 7 der Stirnwand 4 als Grifflasche 8. Diese Klappzunge 6 ist aus einem sich nach oben zur Grifflasche 8 hin verjüngenden Mittelstück 9 und zwei beidseits anschliessenden Flügeln 10 zusammengesetzt. Jeder Flügel 10 weist in etwa halber Höhe k (Fig. 2) eine Einschnürung 11 auf, bis zu der – vom Boden 2 her gesehen – seine Aussenkante 12 etwa parallel zu der jenes Mittelstück 9 begrenzenden äusseren Soll-Reisslinie 14 verläuft und von der ab das obere Kantenteil 13 nach aussen zur oberen Backformseitenkante 15 gerichtet ist. Entlang dieser sind jeweils zwei schmale Randstreifen 16, 17 zu erkennen. Die Knicklinie zwischen diesen beiden ist mit 22 bezeichnet.

Alle beschriebenen Teile sind gemeinsam aus einem Materialstreifen zugeschnitten, der aus einer Kartonschicht 29 mit aufkaschierter Aluminiumfolie 30 besteht. Letztere bildet die zum Forminnenraum Q gerichtete Kontaktschicht, welche an das nicht wiedergegebene Backgut grenzt.

Wie die Fig. 2, 3, 4 erkennen lassen, ist die beschriebene äussere Soll-Reisslinie 14 zwischen dem Mittelstück 9 und dem Flügel 10 der Klappzunge 6 in die Kartonschicht 29 eingeprägt, verletzt also die Aluminiumfolie 30 nicht. Eine in diese eingebrachte innere Soll-Reisslinie 18 verläuft als Gegenritzung parallel dazu in einem Abstand e.

Wird nun an der Grifflasche 8 des Mittelstückes 9 in Pfeilrichtung x gezogen, kann letzteres gemäss Fig. 4 von den – insgesamt mit den Klappstreifen 5 verklebten (Feld F) – Flügeln 10 so getrennt werden, dass an diesen ein Streifen 19 aus Aluminiumfolie 10 und einer dünnen Schicht des Kartons 29 verbleibt. Die beiden Streifen 19 verlaufen über die gesamte Höhe der Stirnwand 4.

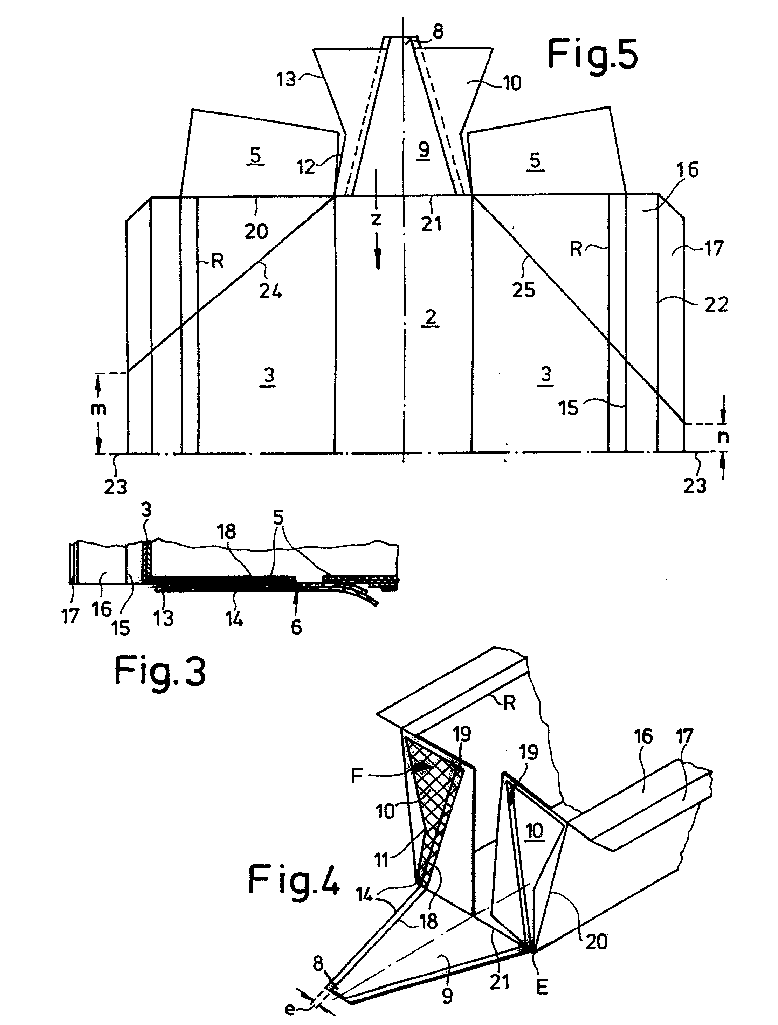

Fig. 5 zeigt eine Zuschnitthälfte bis zur Symmetrielinie 23 des Zuschnittes. Ausser den bereits beschriebenen Knicklinien 15, 20, 21, 22 sind hier noch – von den Backformecken E ausgehende – diagonal in den Seitenwänden 3 um den Randstreifen 16, 17 verlaufende Faltlinien 24 und 25 zu erkennen, die im äusseren Randstreifen 17 in unterschiedlichen Abständen m, n zur Symmetrielinie 23 enden, die ebenfalls eine Faltlinie ist.

Die Faltlinien 23 bis 25 dienen – im Unterschied zu den Knicklinien 15, 20 bis 22 – nicht zur Herstellung der Backform 1, sondern zu deren Faltung zu einem Versandstück. Hierzu werden die Randstreifen 16, 17 in die Ebene der Seitenwand 3 zurückgeführt und die von den diagonalen Faltlinien 24 bzw. 25 begrenzten Wandungsteile der stehenden Backform 1 in eine Richtung y gebogen. Die übrigen Teile der Seitenwände 3 mit den an ihnen festliegenden Stirnwänden 4 knicken dabei in Pfeilrichtung z aufeinander zu. Anschliessend können beide Formhälften – um die Symmetrielinie 23 gefaltet – aufeinandergelegt werden.

Dieses flache Versandstück wird dann vor seiner Verwendung in umgekehrter Weise zurückgeklappt, wodurch eine gebrauchsfertige Backform 1 entsteht. Zur Verbesserung der Wandstabilität werden die Randstreifen 16, 17 um zumindest 90° bzw. 180° aus der Ebene der Seitenwand 3 geklappt.

Um eine Rückformung der Randstreifen 16, 17 unter Einfluss der Backtemperatur und einer dadurch verursachten Spannung in der Aluminiumfolie 30 hintanzuhalten, ist jeweils neben der Rand- oder Knicklinie 15 am oberen Ende der Seitenwand 3 in der Aluminiumfolie eine diese durchtrennende Ritzung R angebracht.

**Patentansprüche**

1. Faltbare Backform (1) mit einem Boden (2) sowie davon ausgehenden Seiten- und Stirnwandungen (3 und 4), welche aus einer Werkstoffbahn mit einer zu dem von der Backforminnenfläche umgebenen Forminnenraum (Q) weisenden Kontaktschicht (30) für das Backgut, insbesondere aus einem Karton (29) mit einer Beschichtung aus Aluminiumfolie (30), zugeschnitten und die Werkstoffbahn ihrerseits an vorgegebenen Linien (15, 20–22) gefaltet ist, wobei die Stirnwandungen (4) miteinander verbundene Klappstreifen (5) der Seitenwandungen (3) sowie ein diesen zugeordnetes, als Knickzunge ausgebildetes Klappteil (6) des gegen ihn durch eine Klapplinie (21) abgegrenzten Bodens (2) aufweisen, dadurch gekennzeichnet, dass das Klappteil (6) ausserhalb des Forminnenraumes (Q) an die Aussenseite der Klappstreifen (5), die Teile der Backforminnenflächen bilden, herangeklappt ist, und dass diese Knickzunge aus einer Mittelzunge (9) mit Zuglasche (8) und beidseits der Mittelzunge (9) vorhandenen sowie von dieser an einer Reisslinie (14, 18) trennbaren Flügeln (10) besteht, welch letztere mit den Klappstreifen (5) fest verbunden sind.

2. Backform nach Anspruch 1, dadurch gekennzeichnet, dass die Reisslinien (14, 18) an jeder Flügelkante eine Gegenritzung bilden, mit der an der Mittelzunge (9) einerseits sowie am Flügel (10) anderseits jeweils ein den Abstand (e) der Ritzungspaarung (14, 18) entsprechender Streifen (19) verbleibt.

3. Backform nach Anspruch 1 oder 2, dadurch gekennzeichnet, dass die Flügel (10) der Knickzunge (6) grossflächig (F) mit den anliegenden Klappstreifen (5) der Seitenwandungen (3) bleibend verklebt sind und diesen die Mittelzunge (9) frei anliegt.

4. Backform nach einem der Ansprüche 1 bis 3, dadurch gekennzeichnet, dass sich die Mittelzunge (9) nach oben hin zu der die Oberkanten der Klappstreifen (5) und der Flügel (10) überragenden Zuglasche (8) verjüngt.

5. Backform nach einem der Ansprüche 1 bis 4, dadurch gekennzeichnet, dass jeder Flügel (10) eine vom Boden (2) der Backform (1) ausgehende und etwa parallel zu den Ritzungen (14, 18) verlaufende Aussenkante (12) aufweist, welche an einer Einschnürstelle (11) in eine obere und zur Seite hin weisende Aussenkante (13) übergeht, die etwa an der Oberkante (15) der benachbarten Seitenwandung (3) endet.

6. Backform nach einem der Ansprüche 1 bis 5 mit an die Oberkante der Seitenwandungen anschliessenden und an einer Faltlinie umklappbaren Randstreifen (16, 17), dadurch gekennzeichnet, dass in den Randstreifen (16 oder 17) eine etwa parallel zum Boden (2) verlaufende Ritzung (R) nahe oder an der Oberkante (15) der Seitenwandung vorgesehen ist, welche die zum Forminnenraum weisende Kontaktschicht (30) durchtrennt.

**Claims**

1. A foldable baking tin (1) with a bottom (2) and also side (3) and end (4) walls extending from it, which is cut from a material web having a contact layer (30) for the baking material facing towards the interior of the tin (Q) which is surrounded by the internal surface of the tin, the material web especially being made of cardboard (29) with a coating of aluminium foil (30) and being, on its part, folded at predetermined lines (15, 20–22), with the end walls (4) including flaps (5) of the side walls (3) connected together and also including a folding part (6) in the form of a folding tongue allocated to the side walls and separated from the bottom (2) by a folding line (21), characterized in that outside the interior of the baking tin (Q) a folding tongue (6) is folded up against the outer surface of the flaps (5), and that the folding tongue consists of a central portion (9) with a gripping tab (8) and lobes (10) on each side of the central portion and separable from it at a tear line (14, 18), the lobes being strongly connected with the flaps (5).

2. A baking tin according to claim 1, characterized in that the tear lines (14, 18) form at each edge of the lobes an opposed tear line with which a strip (19) corresponding to the spacing (e) of the tear lines (14, 18) remains at the central portion of the folding tongue (9) and also at the lobes (10).

3. A baking tin according to claim 1 or claim 2, characterized in that the lobes (10) of the folding tongue (6) are permanently adhered to the adjoining flaps (5) of the side walls (3) over a large surface area (F) and in that the central portion of the folding tongue (9) is freely movable at the side walls.

4. A baking tin according to any of claims 1 to 3, characterized in that the central portion of the folding tongue (9) contracts upwards towards the gripping tab (8) extending beyond the upper edges of the flaps (5) and of the lobes (10).

5. A baking tin according to any of claims 1 to 4, characterized in that each lobe (10) has an outer edge (12) extending from the bottom (2) of the baking tin (1) and roughly parallel to its tear lines (14, 18), which passes through a contracting point (11) into an upper outer edge (13) facing the side, which terminates about at the upper edge (15) of the neighbouring side wall (3).

6. A baking tin according to any of claims 1 to 5, with edge strips (16, 17) joined to the side walls at their upper edge and foldable at a folding line, characterized in that there is provided in the edge strips (16 or 17) a tear line (R) extending roughly parallel to the bottom (2), near or at the upper edge (15) of the side wall, which cuts through the contact layer (30) facing towards the interior of the tin.

**Revendications**

1. Moule à pâtisserie (1) avec un fond (2) ainsi que des panneaux de côté (3) et de front (4) en émanant, laquelle est coupée d'une bande en rouleau de matériau pourvu d'une couche de contact (30) pour la matière à cuire, située dans la direction de l'intérieur (Q) de la moule entourné par la surface intérieure de la moule, composée en particulier d'un carton (29) couvert d'une feuille d'aluminium (30), et la bande en rouleau de sa part est pliée le long de lignes (15, 20, 21, 22) ébauchées, à l'occasion de quoi les panneaux de front (4) comportent des bandes à plier (5) reliées aux parois de côté (3) ainsi qu'une pièce à courber (6) coordinée, délimitée du fond (2) par une ligne à courber (21) et formée comme éclisse à plier, caractérisé en ce que, hors de l'intérieur (Q) de la moule, la pièce à courber (6) est pliée auprès l'extérieur des bandes à plier (5), et que cette éclisse à plier se compose d'une éclisse centrale (9) pourvue d'une lisière à tirer (8) et des ailes (10) disposées des deux côtés de l'éclisse centrale (9) et separables le long d'une ligne de détachement (14, 18), dont les ailes (10) sont réliées fermément aux bandes à plier (5).

2. Moule à pâtisserie selon revendication 1, caracterisé en ce que les lignes de détachement (14, 18) forment une coutre-rainure à chaque côté d'aile, de manière qu'une bande (19) correspondant à l'écart des deux rainures (14, 18) reste à l'éclisse centrale (9) d'une part ainsi qu'à l'aile (10) d'autre part.

3. Moule à pâtisserie selon revendication 1 ou 2, caractérisé en ce que les ailes (10) de la pièce à courber (6) sont collées permanent et à grande étendue (F) sur les bandes à plier (5) adjacentes auxquelles l'éclisse centrale (9) est contigue librement.

4. Moule à pâtisserie selon une des revendications 1 à 3, caractérisé en ce que l'éclisse centrale (9) diminue vers en haut en direction de la lisière à tirer (8) s'élévant plus haut que les bords supérieurs des bandes à plier (5) et les ailes (10).

5. Moule à pâtisserie selon une des revendications 1 à 4, caractérisé en ce que chaque aile (10) a une face extérieure (12) émanant du fond (2) de la moule à pâtisserie (1) et se déroulant à peu près parallèlement aux rainures (14, 18) et que cette face extérieure (12), à une rétrécissement (11), passe à une face extérieure (13) en dessus détournée en direction de côté et se terminant à peu près au bord supérieur (15) de la paroi latérale voisine.

6. Moule à pâtisserie selon une des revendications 1 à 5 pourvue de bandes de bord (16, 17) se rattachant aux bords supérieurs (15) des parois latérales et pliable le long d'une ligne caractérisé en ce qu'une rainure (R) se déroulant à peu près parallèlement au fond (2) est prévue dans les bandes de bord (16 ou 17), auprès ou au bord supérieur de la paroi latérale et laquelle sépare la couche de contact (30) vers l'intérieur de la moule.

0 019 783

Fig.1

Fig.2

7

Fig.5

Fig.3

Fig.4